# EUROPEAN PATENT SPECIFICATION

(11) **EP 3 429 167 B1**
(45) Date of publication and mention of the grant of the patent: **30.12.2020**
(21) Application number: 17762453.3
(22) Date of filing: 23.02.2017
(51) Int. Cl.: H04L 29/08, H04L 29/06, H04L 9/32, G06F 21/64

(54) **PUBLISHED INFORMATION PROCESSING METHOD AND DEVICE, AND INFORMATION PUBLISHING SYSTEM**
VERFAHREN UND VORRICHTUNG ZUR VERARBEITUNG VERÖFFENTLICHTER INFORMATIONEN UND INFORMATIONSVERÖFFENTLICHUNGSSYSTEM
PROCÉDÉ ET DISPOSITIF DE TRAITEMENT D'INFORMATIONS PUBLIÉES ET SYSTÈME DE PUBLICATION D'INFORMATIONS

(30) Priority: 08.03.2016 CN 201610130265
(43) Date of publication of application: 16.01.2019
(73) Proprietor: Alibaba Group Holding Limited, Grand Cayman (KY)
(72) Inventor: YANG, Li, Hangzhou Zhejiang 311121 (CN)
(74) Representative: Fish & Richardson P.C.
(86) International application number: PCT/CN2017/074629
(87) International publication number: WO 2017/152767

(56) References cited:
- CN-A- 102 263 827
- CN-A- 102 693 242
- CN-A- 103 685 278
- CN-A- 104 158 816
- US-A1- 2003 126 400
- US-A1- 2007 219 942
- US-A1- 2012 096 564

## Description

### TECHNICAL FIELD

The present application relates to the field of data information processing technologies, and in particular, to a published information processing method and device, and an information publishing system.

### BACKGROUND

With the rapid development of Internet technologies, a growing number of companies and organizations choose to display information to users on Internet platforms. For example, an online retailer can publish promotion information and merchandise sales information on the Internet; a consumer can publish a comment about a merchandise and such on the Internet; a banking organization can publish financial product sales information, bank card purchase discount information, and such to users on the Internet; and a public welfare organization can disclose donation information to users on the Internet. By using the Internet to publish information to the users, companies and organizations' operating efficiency can be improved, and the users can learn more information. However, a published information manager can be an information publisher. To be specific, the information publisher can delete or modify the published information or adjust a sequence of the published information by using a back-end server. Originality and integrity of the information published by the information publisher are very important to the users, and improved credibility of the published information makes the information publishers more trusted by the users.

In the existing technology, published information obtained by the users is mutually independent and almost not associated with each other. In this case, the information publisher can easily tamper with the published information. For example, if users make comments about low-quality after-sales services offered by a certain online retailer for a merchandise sold by the online retailer, because such a comment may affect sales of the merchandise, the online retailer can delete the comment from the back-end database through some channels. Therefore, other users will not know about the comment or identify that the comment is tampered with by the information publisher. For another example, if a company publishes an announcement on the Internet at a time later than a time at which the announcement should be published, that is, the company modifies the publishing time of the announcement in a back-end database, it is difficult for the users to provide evidence.

In the existing technology, due to lack of user supervision, the information publisher can modify or delete the published information, and consequently, originality and integrity of the information published by the information publisher cannot be ensured, and credibility of the published information is reduced. Therefore, in the existing technology, a published information processing method for improving the credibility of the publishing information is needed.
US 2003/126400 describes data integrity checking methods that utilize a cumulative hash function. A sequence of data blocks and a corresponding sequence of hashes are stored on a medium. Each hash in the sequence of hashes corresponds to a data block in the sequence of data blocks. A particular hash corresponding to a particular data block is determined as a function of the particular data block and at least one previous hash corresponding to a previous data block in the sequence of data blocks.
US 2012/096564 describes data integrity protecting and verifying methods, apparatuses and systems. A data integrity protecting method include: calculating a Hash value of each of the data blocks by using a first Hash function, to obtain a plurality of block Hash values which form a first series of Hash values; calculating a second series of Hash values based on the first series of Hash values, the second series of Hash values comprising a plurality of chain Hash values, each of which being associated with a corresponding block Hash value in the first series of Hash values and being associated with a neighbor chain Hash value in the second series of Hash values, wherein the first series of Hash values and the second series of Hash values used as integrity information of the data; and generating verification information of the data by using a last chain Hash value.

### SUMMARY

The invention is defined in the appended claims. Implementations of the present application are intended to provide an information publishing method and device, and an information publishing system, to increase difficulty in tampering with published information, maintain originality and integrity of a published information record, and improve credibility of the published information.

The information publishing method and device, and an information publishing system provided in the implementations of the present application are implemented as described below.

A published information processing method is provided, and the method includes the following: obtaining information to be published, and determining whether the information to be published is the first piece of published information corresponding to a publishing service item; if the determining result is yes, calculating an encryption value of predetermined initial information by using a predetermined encryption algorithm, and adding the encryption value of the predetermined initial information to the information to be published; or otherwise, calculating, by using a predetermined encryption algorithm, an encryption value of encrypted data including the last published information preceding the information to be published, and adding the encryption value of the encrypted data to the information to be published; and displaying, based on a predetermined format, the information to be published to which the encryption value is added.

A published information processing device is provided, and the device includes the following: a to-be-published information acquisition unit, configured to obtain information to be published, and determine whether the information to be published is the first piece of published information corresponding to a publishing service item; a predetermined data encryption value calculation unit, configured to calculate an encryption value of predetermined initial information by using a predetermined encryption algorithm, and add the encryption value of the predetermined initial information to the information to be published if the determining result of the to-be-published information acquisition unit is yes; an encryption value calculation unit, configured to calculate, by using a predetermined encryption algorithm, an encryption value of encrypted data including the last published information preceding the information to be published, and add the encryption value of the encrypted data to the information to be published if the determining result of the to-be-published information acquisition unit is no; and a to-be-published information display unit, configured to display, based on a predetermined format, the information to be published to which the encryption value is added.

An information publishing system, including an I/O interface and a processor, where the I/O interface is configured to obtain information to be published, and send processed information to be published to a specified display processing unit; and the processor is configured to determine whether the information to be published is the first piece of published information corresponding to a publishing service item; if the determining result is yes, calculate an encryption value of predetermined initial information by using a predetermined encryption algorithm, and add the encryption value of the predetermined initial information to the information to be published; or otherwise, calculate, by using a predetermined encryption algorithm, an encryption value of encrypted data including the last published information preceding the information to be published, and add the encryption value of the encrypted data to the information to be published; and generate the processed information to be published.

According to the published information processing method and device, and the information publishing system provided in the present application, an association relationship can be established between mutually independent published information, and a linked encryption system is formed in a publishing service item that includes the published information. In the linked encryption system, an information interpolator needs to modify all published information records after modifying corresponding published information, so that all the data looks flawless. This requires high costs, and can be easily identified. Therefore, according to the method and device in the implementations, difficulty in tampering with a published information record can be increased, originality and integrity of the published information record are ensured, and credibility of the published information is greatly improved. In addition, according to the published information processing method and device provided in the present application, the users can verify, by using the client terminal, whether an encryption value of the published information matches a disclosed encryption value, and then determine whether the published information record is tampered with. Therefore, according to the method and device in the implementations, a role of the users in supervising the published information records can be further enhanced, and credibility of the published information is greatly improved, and the information publisher is highly trusted by the users.

### BRIEF DESCRIPTION OF DRAWINGS

To describe the technical solutions in the implementations of the present application or in the existing technology more clearly, the following briefly describes the accompanying drawings required for describing the implementations or the existing technology. Apparently, the accompanying drawings in the following description merely show some implementations recorded in the present application, and a person of ordinary skill in the art can still derive other drawings from these accompanying drawings without creative efforts.
FIG. 1 is a method flowchart illustrating an implementation of a published information processing method, according to the present application;
FIG. 2 is a method flowchart illustrating an implementation of an encryption value calculation method, according to the present application;
FIG. 3 is a method flowchart illustrating another implementation of a published information processing method, according to the present application;
FIG. 4 is a schematic structural diagram illustrating modules in an implementation of a published information processing device, according to the present application;
FIG. 5 is a schematic structural diagram illustrating modules in an implementation of an encryption value calculation unit, according to the present application;
FIG. 6 is a schematic structural diagram illustrating modules in another implementation of a published information processing device, according to the present application; and
FIG. 7 is a schematic structural diagram illustrating modules in another implementation of a published information processing device, according to the present application.

### DESCRIPTION OF IMPLEMENTATIONS

To make a person skilled in the art understand the technical solutions in the present application better, the following clearly and completely describes the technical solutions in the implementations of the present application with reference to the accompanying drawings in the implementations of the present application. Apparently, the described implementations are merely some but not all of the implementations of the present application. All other implementations obtained by a person of ordinary skill in the art based on the implementations of the present application without creative efforts shall fall within the protection scope of the present application.

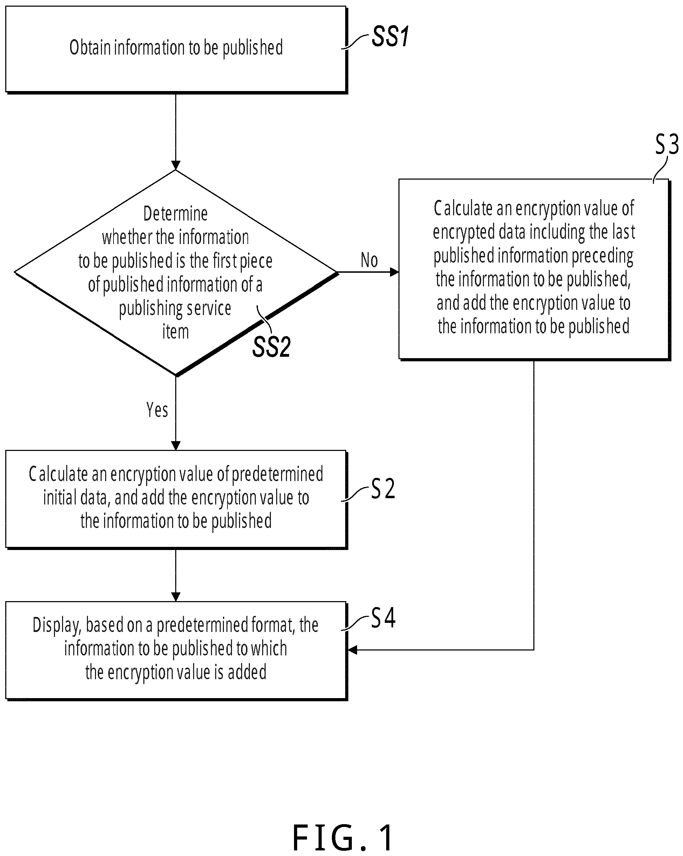

The following describes in detail a published information processing method in the present application with reference to the accompanying drawings. FIG. 1 is a schematic method flowchart illustrating an implementation of a published information processing method, according to the present application. Although the present application provides method operation steps shown in the following implementations or accompanying drawings, the method can include more or fewer operation steps based on a conventional or non-creative effort. For steps that have no necessary logical causal relationship, an execution sequence of the steps is not limited to an execution sequence provided in the implementations of the present application. During actual published information processing or when the method is performed by a device, the method can be performed based on a method sequence shown in the implementations or the accompanying drawings, or can be performed in parallel (for example, in an environment in which there are parallel processors or multi-thread processing is performed).

An implementation of the published information processing method provided in the present application is shown in FIG. 1, and the method can include the following steps.

S1: Obtain information to be published, and determine whether the information to be published is the first piece of published information corresponding to a publishing service item.

In this implementation of the present application, the publishing service item can include a service of publishing information by a company or an organization to users, and the timeliness, authenticity, and integrity of the service usually affect interests of the users. Generally, different publishing organizations can formulate a corresponding publishing service item based on requirements of the actual publishing service. For example, a publishing service item of publishing information on an online shopping platform can include a consumer's comment about a merchandise, a piece of published information regarding extraction of some profits of a sold merchandise as a charitable donation, and such. Generally, in an implementation provided in the present application, the service item can include at least one of the following: user comment management, timely announcement information, donation information, crowdsourcing data, a payment information record, an order data record, and such.

Specifically, in this implementation, the user comment management can include a user's comment about a merchandise or a service. Authenticity and integrity of the user's comment are very helpful when other users try to evaluate quality of the merchandise or the service. The timely announcement information can include information with timeliness that is published by a company or an organization. An actual publishing time of the timely announcement information helps safeguard the interests of the users. The donation information can include records about materials donated by the users to a public welfare organization or a charity. Authenticity and integrity of the donation records can improve credibility of a public welfare activity. The crowdsourcing data can include investment data that is of the users who participate in a crowdsourcing project and that is disclosed by a fundraiser. Authenticity and integrity of the crowdsourcing data greatly help safeguard the interests of the users. The payment information record can be a payment record displayed by a payment platform to a user. Integrity of the payment information record helps the user understand an individual spending status, and such. The order data record can be a sales record of a merchandise or a service displayed by an online retailer.

An implementation process can include the following:
SS1: Obtain the information to be published. The information to be published can include information that needs to be published by the users about the service item. A large shopping platform is used as an example. On the shopping platform, both an online retailer and a consumer are users. The online retailer can publish merchandise information and a promotion announcement on the shopping platform, and the users can publish comments about a merchandise on the shopping platform. In the method in this implementation, predetermined initial information can be set as a start point of information encryption, to provide assistance in an information encryption calculation process.

After the information to be published is obtained, SS2 can be performed: determining whether the information to be published is the first piece of published information corresponding to the publishing service item. In this implementation, the first piece of published information can be the first comment published by the users in a merchandise comment publishing service item. In another implementation application scenario, the first piece of published information can be the first piece of announcement information published in a timely announcement information publishing service item. It is worthwhile to note that in a process of determining whether the information to be published is the first piece of published information corresponding to the publishing service item, whether the information to be published is the first piece of published information of the publishing service item can be determined based on a publishing time of the information to be published. Specifically, when it is identified that no other published information is published in the publishing service item before the publishing time of the information to be published, it can be determined that the information to be published is the first piece of published information.

In this implementation of the present application, the information to be published can be obtained, and then whether the information to be published is the first piece of published information corresponding to the publishing service item can be determined.

S2: If the determining result is yes, calculate an encryption value of predetermined initial information by using a predetermined encryption algorithm, and add the encryption value of the predetermined initial information to the information to be published.

If the information to be published is the first piece of published information corresponding to the service item, the encryption value of the predetermined initial information can be calculated. In this implementation, the predetermined initial information can be a character string randomly generated in a back-end database, or can be a predetermined character string. The predetermined encryption algorithm can be a hash algorithm. The hash algorithm can map a binary value with an arbitrary length to a relatively short binary value with a fixed length. The encryption value is a hash value obtained after processing is performed by using the hash algorithm. The hash value is a unique and terse value representation method of a segment of data. A different hash value is generated even if one letter in the information to be published is modified, so as to effectively ensure that encrypted data is not tampered with, and ensure originality and integrity of the encrypted data. A unique encryption value can be obtained through calculation by using the hash algorithm, and security of the encrypted data is ensured. In this implementation, encryption calculation can be performed by using a hash algorithm in the following methods as the predetermined encryption algorithm: Message Digest 2 (MD2), Message Digest 4 (MD4), Message Digest 5 (MD5), Secure Hash Algorithm 1 (SHA1), and such. Certainly, the predetermined encryption algorithm can be an encryption algorithm selected based on an encryption requirement or a data processing requirement, or can even be a user-defined encryption algorithm.

The encryption value obtained through calculation is added to the information to be published. In this case, the information to be published is updated, and the encryption value of the predetermined initial information is added to original data of the information to be published.

It is worthwhile to note that the predetermined initial information and the predetermined encryption algorithm used to calculate the encryption value can be disclosed to the users, so that the users verify originality and integrity of the published information. Certainly, the predetermined initial information can be omitted. In this case, the predetermined initial information is set to 0, and an encryption value obtained after the predetermined initial information is encrypted is still 0.

S3: Otherwise, calculate, by using a predetermined encryption algorithm, an encryption value of encrypted data including the last published information preceding the information to be published, and add the encryption value of the encrypted data to the information to be published.

If the information to be published is not the first piece of published information corresponding to the publishing service item, the encryption value of the encrypted data including the last published information preceding the information to be published can be calculated, and the encryption value of the encrypted data is added to the information to be published.

In this implementation, the encrypted data can be the last published information preceding the information to be published. Then, the last published information can be encrypted by using the predetermined encryption algorithm, to obtain encryption value of the last published information. Of course, in other implementations, the encrypted data may include the following.

In this implementation of the present application, the encrypted data can further include at least one piece of published information, which precedes the last published information, obtained by using a predetermined method.

In this implementation of the present application, the predetermined method can include at least one of the following: obtaining published information with a specified number of intervals before the information to be published; and obtaining published information within a predetermined time range before the information to be published.

The predetermined method can be a user-defined acquisition method based on an actual application scenario. For example, in some actual application scenarios, information about a certain publishing service item needs to be published relatively frequently. In this case, if an encryption value of the last published information is calculated each time information is published, operating efficiency of a back-end server is definitely affected. Specifically, in an application scenario, users can add 500 comments about a certain fast-selling merchandise each day. In the application scenario, the predetermined method can be set to calculating an encryption value once for every previous 20 comments. For example, original comments generated on the N^{th} day include MSG-001, MSG-002, MSG-003, ..., MSG-499, and MSG-500. When the 21^{st} comment MSG-021 is published, an encryption value of the previous 20 comments is calculated, to obtain a hash value (1-20). The hash value (1-20) and MSG-021 are published together, and the finally published 21^{st} comment is MSG-N021. When the 41^{st} comment MSG-041 is published, an encryption value of 20 comments from the 21^{st} comment to the 40^{th} comment is calculated. The 21^{st} comment is MSG-N021, and the 22^{nd} comment to the 40^{th} comment are MSG-022 to MSG-040. An encryption value of the 21^{st} comment to the 40^{th} comment is calculated, to obtain a hash value (21-40). The hash value (21-40) and MSG-041 are published together, and the finally published 21^{st} comment is MSG-N041. Certainly, in another implementation application scenario, different numbers of pieces of published information can be used for calculating the encryption value each time. For example, a time setting method can be used. The encryption value is calculated once every N hours. Specifically, an encryption value of information published in the previous N hours before the information to be published can be calculated. An encryption value of a plurality of pieces of published information preceding the information to be published is calculated, so that operation frequency of the server can be reduced, and storage space of the server or client terminal can be saved.

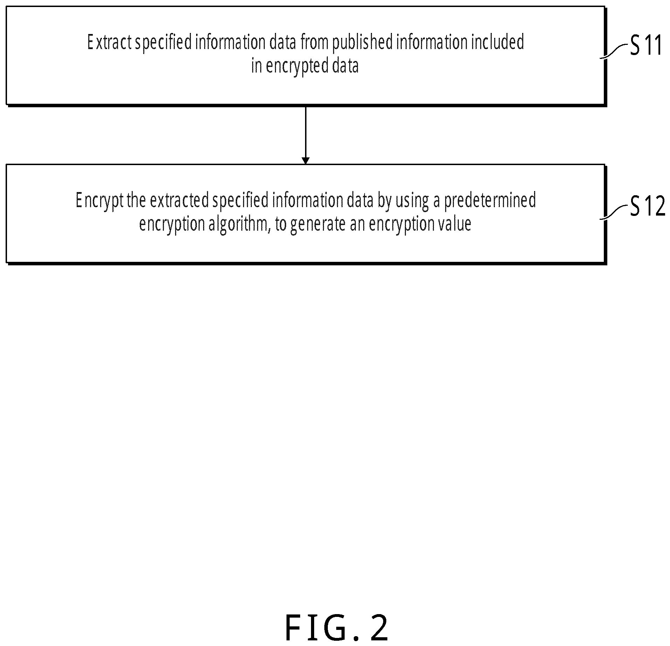

In an implementation of the present application, FIG. 2 is a method flowchart illustrating an implementation of an encryption value calculation method, according to the present application. As shown in FIG. 2, the calculating, by using a predetermined encryption algorithm, an encryption value of encrypted data including the last published information preceding the information to be published can include the following steps.

S11: Extract specified information data from published information included in the encrypted data.

Generally, all information data can be extracted from the published information included in the encrypted data, and all original data of the published information is used for encryption calculation. However, in some application scenarios, an amount of original data included in the published information is relatively large, or some of the original data changes slightly, or some of the original data has relatively small impact on the interests of the users. In this case, some information can be extracted from the original data of the published information as the specified information data. For example, in a donation information publishing service item, published information on a public welfare website usually includes data such as a name, an address, a donation amount, and a phone number of a donator. Information such as the address and the phone number of the donator has relatively small impact on authenticity of a donation activity. Therefore, in an encryption value calculation process, the data information such as the address and the phone number of the donator can be ignored, and only the name and the donation amount of the donator need to be used as the specified information data for encryption calculation.

S12: Encrypt the extracted specified information data by using the predetermined encryption algorithm, to generate the encryption value.

After the specified information data for encryption calculation is determined, the encryption value can be calculated and generated. Specifically, the extracted specified information data can be encrypted by using the predetermined encryption algorithm, to generate the encryption value. Similar to step S2, the predetermined encryption algorithm can be a hash algorithm, and correspondingly, the encryption value is a hash value obtained after processing is performed by using the hash algorithm. In this implementation, encryption calculation can be performed by using a hash algorithm in the following methods as the predetermined encryption algorithm: Message Digest 2 (MD2), Message Digest 4 (MD4), Message Digest 5 (MD5), Secure Hash Algorithm 1 (SHA1), and such.

Some data is selected from the original data included in the published information as the specified information data for encryption calculation, so that some data that has small impact on originality and authenticity of the published information can be removed, an operation amount of the server can be reduced, and storage space of the server or the client terminal can be saved.

In another implementation of the present application, the method can further include the following: obtaining additional data information, where correspondingly, the encrypted data includes the additional data information.

In the original data included in the published information, some data can have small impact on the interests of the users. However, some data that can have large impact on the interests of the users is not included in the original data. For example, timely announcement information published by some companies or organizations cannot necessarily include a time at which information is published. However, for the users, a publishing time of timely information can be used as a basis to determine whether a company or an organization delays the publishing or tampers with the publishing time. In this implementation, the additional data information can be further obtained, and the additional data information is used as a part of data for encryption calculation. In addition, the additional data information can be obtained from a file such as an operating log of the server. Specifically, in an application scenario, original timely announcement information published by the online retailer to the users includes MEG-1, MEG-2, ..., and MEG-*N*. In an encryption value calculation process, time information can be added to the encrypted data. When MEG-1 is published, a hash value (MEG-0+T0), that is, predetermined initial information MEG-0 plus a predetermined initial time T0, can be calculated. The hash value (MEG-0+T0) and MEG-1 are published together, and the finally published first piece of timely announcement information is MEG-T1. When second timely announcement information MEG-2 is published, a hash value (MEG-1+T1), that is, MEG-T1 plus a publishing time T1 of MEG-T1, can be calculated. The hash value (MEG-1+T1) and MEG-2 are published together, and the finally published second timely announcement information is MEG-T2. Certainly, in another implementation, the additional data information can be information such as a code of an information publishing server, or an organization code of an information publishing unit.

Additional data information in the original data included in the published data is used as encrypted data for encryption calculation, so that uniqueness and authenticity of the encrypted data can be further enhanced, difficulty in tampering with the published information can be increased, and security of the published information can be ensured.

It is worthwhile to note that one purpose of the published information processing method provided in the present application is to allow the users to participate in supervising originality and integrity of the published information. In another implementation of the present application, subsequently, the predetermined encryption algorithm, the specified information data, or the additional data information used to generate the encryption value through calculation can be further published to the users, so that the users can verify the originality and the integrity of the published information with reference to the additional data information.

In this implementation, the encryption value of the encrypted data including the last published information preceding the information to be published is added to the information to be published, so that adjacent pieces of published information are associated with each other, and a linked encryption system is formed in the whole publishing service item. The users can identify, by using only a disclosed predetermined encryption algorithm and encrypted data for encryption calculation, whether the published information is tampered with. In the linked encryption system, an information interpolator needs to modify all published information records after modifying corresponding published information, so that all the data looks flawless. This requires high costs, and can be easily identified. Therefore, the published information processing method provided in the present application has high credibility in maintaining data originality and integrity.

S4: Display, based on a predetermined format, the information to be published to which the encryption value is added.

After the information to be published is updated, the information to be published actually includes two parts: the original data to be published, and the added encryption value of the encrypted data including the last published information preceding the information to be published. The updated information to be published can be displayed by using a plurality of methods. In an implementation of the present application, the encryption value can be directly added to an end location of the original data of the original information to be published. In another implementation of the present application, a link to the encryption value can be created in the original published information, and the users can obtain the encryption value by clicking on the link. In another implementation of the present application, a table that stores the information to be published and the encryption value added to the information to be published can be created in a display page of the service item. The users can search the table for the encryption value.

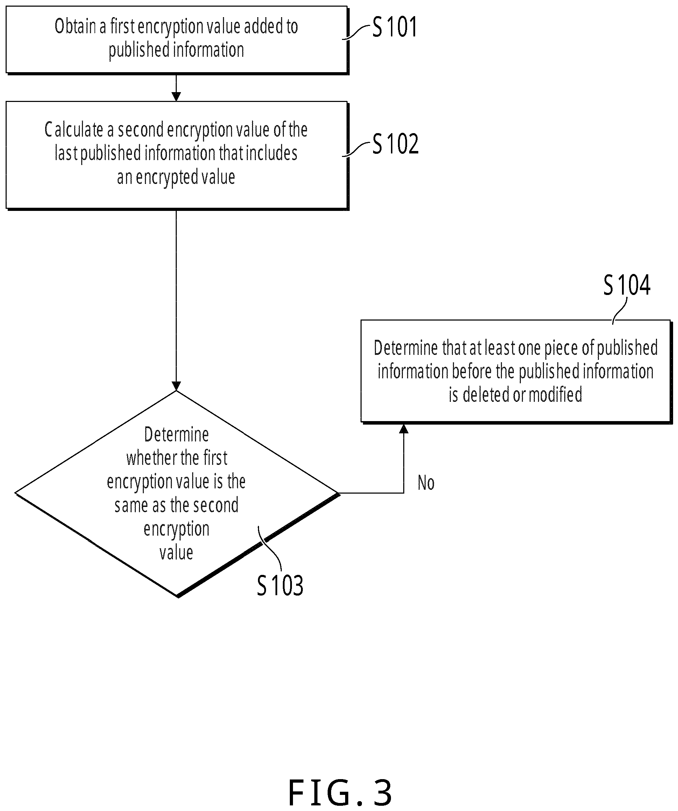

The present application further provides an implementation of a published information processing method implemented from a perspective of client terminal. FIG. 3 is a method flowchart illustrating another implementation of a published information processing method, according to the present application. As shown in FIG. 3, the method can include the following steps.

S101: Read, from published information, a first encryption value that is of encrypted data including the last published information of the published information by using a predetermined encryption algorithm; or when published information is the first piece of published information of a publishing service item, read, from the published information, a first encryption value that is of predetermined initial information and that is calculated by using a predetermined encryption algorithm.

After obtaining the published information, the client terminal can verify whether the last published information preceding the published information is tampered with. First, the first encryption value that is of the encrypted data including the last published information preceding the published information and that is calculated by using the predetermined encryption algorithm can be read from the published information; or when the published information is the first piece of published information of the publishing service item, the first encryption value that is of the predetermined initial information and that is calculated by using the predetermined encryption algorithm can be read from the published information. The first encryption value can be directly obtained by using the display method provided in the previous S4.

S102: Calculate, based on a disclosed predetermined encryption algorithm and the last published information that precedes the published information and that includes an encryption value, a second encryption value of the last published information that includes an encryption value.

After verifying whether the last published information preceding the published information is tampered with, the client terminal can determine, through calculation, whether an actual encryption value of the last published information that precedes the published information and that includes an encryption value is the same as an encryption value included in the published information. Specifically, the client terminal can calculate, based on the disclosed predetermined encryption algorithm and the last published information that precedes the published information, that includes an encryption value and that is used to calculate an encryption value, the second encryption value of the last published information that includes an encryption value.

S103: Determine whether the first encryption value is the same as the second encryption value.

S104: If the determining result is no, determine that at least one piece of published information before the published information is deleted or modified.

When the first encryption value and the second encryption value are different, it can be determined that at least one piece of the publishing information before the published information is tampered with (deleted or modified).

According to the published information processing method provided in the present application, an association relationship can be established between mutually independent published information, and a linked encryption system is formed in a publishing service item that includes the published information. In the linked encryption system, an information interpolator needs to modify all published information records after modifying corresponding published information, so that all the data looks flawless after the published information is modified. This requires high costs, and can be easily identified. Therefore, according to the method in this implementation, difficulty in tampering with the published information record can be increased, originality and integrity of the published information record are maintained, and credibility of the published information is greatly improved. In addition, according to the published information processing method provided in the present application, the users can verify, by using the client terminal, whether the encryption value of the published information matches a disclosed encryption value, and then determine whether the published information record is tampered with. Therefore, according to the method in this implementation, a role of the users in supervising the published information records can be further enhanced, and credibility of the published information is greatly improved, and the information publisher is highly trusted by the users.

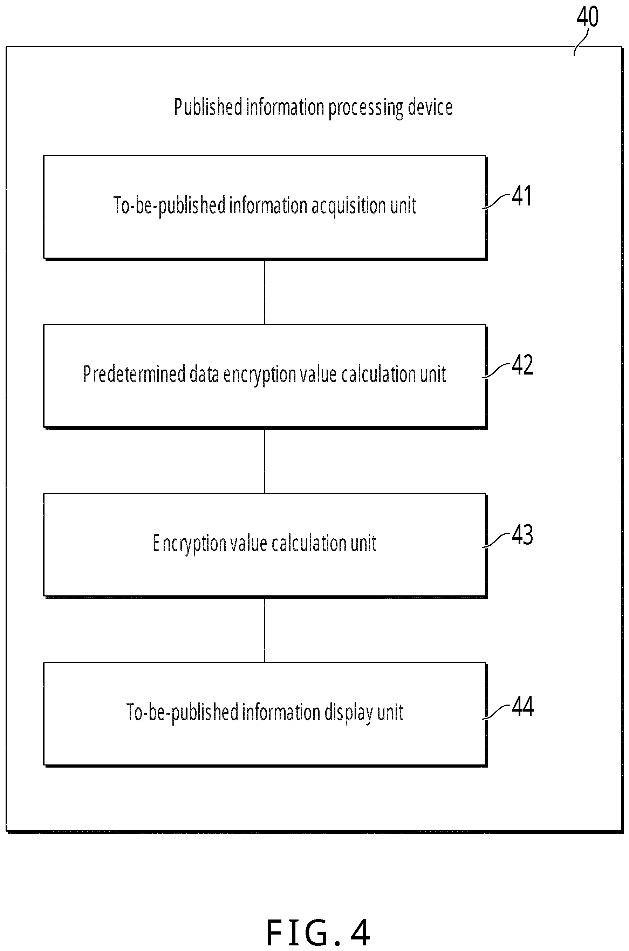

Based on the published information processing method provided in the implementations of the present application, the present application further provides a published information processing device. FIG. 4 is a schematic structural diagram illustrating modules in an implementation of a published information processing device, according to the present application. As shown in FIG. 4, the device 40 can include the following: a to-be-published information acquisition unit 41, configured to obtain information to be published, and determine whether the information to be published is the first piece of published information corresponding to a publishing service item; a predetermined data encryption value calculation unit 42, configured to calculate an encryption value of predetermined initial information by using a predetermined encryption algorithm, and add the encryption value of the predetermined initial information to the information to be published if the determining result of the to-be-published information acquisition unit is yes; an encryption value calculation unit 43, configured to calculate, by using a predetermined encryption algorithm, an encryption value of encrypted data including the last published information preceding the information to be published, and add the encryption value of the encrypted data to the information to be published if the determining result of the to-be-published information acquisition unit is no; and a to-be-published information display unit 44, configured to display, based on a predetermined format, the information to be published to which the encryption value is added.

According to the published information processing device provided in the present application, an association relationship can be established between mutually independent published information, and a linked encryption system is formed in a publishing service item that includes the published information. In the linked encryption system, an information interpolator needs to modify all published information records after modifying corresponding published information, so that all the data looks flawless. This requires high costs, and can be easily identified. Therefore, according to the device in this implementation, difficulty in tampering with the published information record can be increased, originality and integrity of the published information record are ensured, and credibility of the published information is greatly improved.

In an implementation of the present application, the encrypted data can further include at least one piece of published information, which precedes the last published information, obtained by using a predetermined method.

In this implementation, the at least one piece of published information before the last published information is added to the encrypted data, so that adjacent pieces of published information are associated with each other, a linked encryption system is formed in a whole publishing service item, and security of the encryption system for the publishing service item is improved.

In an implementation, the predetermined method can be set to obtaining published information with a specified number of intervals before the information to be published or obtaining published information within a predetermined time range before the information to be published. Therefore, in another implementation of the device of the present application, the processing device can further include the following: a predetermined number information acquisition unit, configured to obtain published information with a specified number of intervals before the information to be published; and a predetermined time information acquisition unit, configured to obtain published information within a predetermined time range before the information to be published.

The published information with a specified number of intervals or the published information within a predetermined time range before the information to be published is obtained by using the predetermined number information acquisition unit or the predetermined time information acquisition unit, so that when a server calculates an encryption value of a plurality of pieces of published information preceding the information to be published, operation frequency of the server can be reduced, and storage space of the server or the client terminal can be saved.

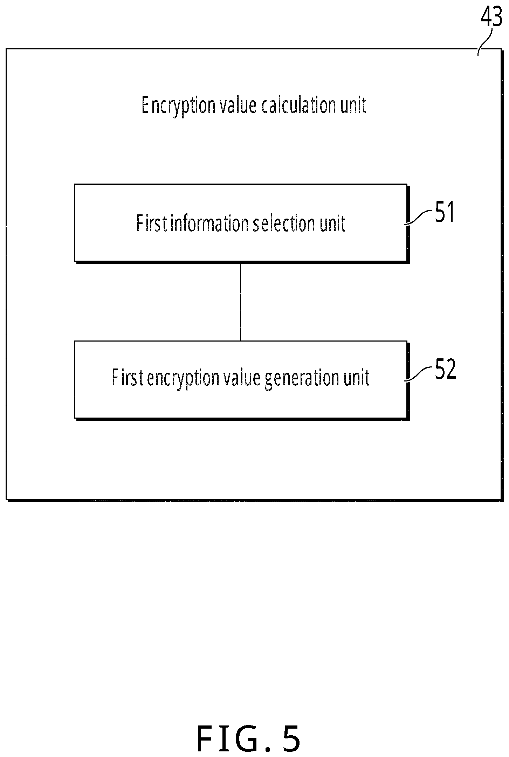

FIG. 5 is a schematic structural diagram illustrating modules in an implementation of an encryption value calculation unit, according to the present application. As shown in FIG. 5, the encryption value calculation unit 43 can include the following: a first information selection unit 51, configured to extract specified information data from published information included in the encrypted data; and a first encryption value generation unit 52, configured to encrypt the extracted specified information data by using the predetermined encryption algorithm, to generate the encryption value.

Some data is selected from original data included in the published information as the specified information data for encryption calculation by using the encryption value calculation unit 43, so that some data that has small impact on originality and authenticity of the published information can be removed, the computational amount of the server can be reduced, and storage space of the server or the client terminal can be saved.

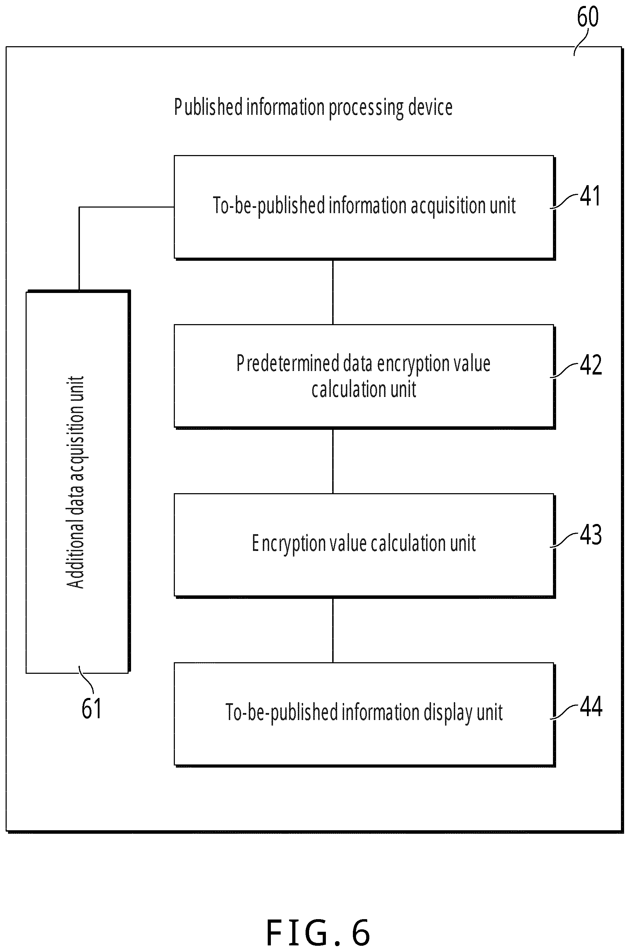

FIG. 6 is a schematic structural diagram illustrating modules in another implementation of a published information processing device, according to the present application. As shown in FIG. 6, the device 60 can further include the following: an additional data acquisition unit 61, configured to obtain additional data information, where correspondingly, the encrypted data in the encryption value calculation unit 43 includes the additional data information.

Additional data information in original data included in the published data is used as encrypted data for encryption calculation by using the additional data acquisition unit 61, so that uniqueness and authenticity of the encrypted data can be further enhanced, difficulty in tampering with the published information can be increased, and security of the published information can be ensured.

In an implementation of the present application, the predetermined encryption algorithm is a hash algorithm, and the encryption value is a hash value obtained after processing is performed by using the hash algorithm. A unique encryption value can be obtained through calculation by using the hash algorithm, and security of the encrypted data is ensured. In this implementation, encryption calculation can be performed by using a hash algorithm in the following methods as the predetermined encryption algorithm: Message Digest 2 (MD2), Message Digest 4 (MD4), Message Digest 5 (MD5), Secure Hash Algorithm 1 (SHA1), and such. Certainly, the predetermined encryption algorithm can be an encryption algorithm selected based on an encryption requirement or a data processing requirement, or can even be a user-defined encryption algorithm.

In an implementation of the present application, the publishing service item can include at least one of the following: user comment management, timely announcement information, donation information, crowdsourcing data, payment information record, order data record, and such.

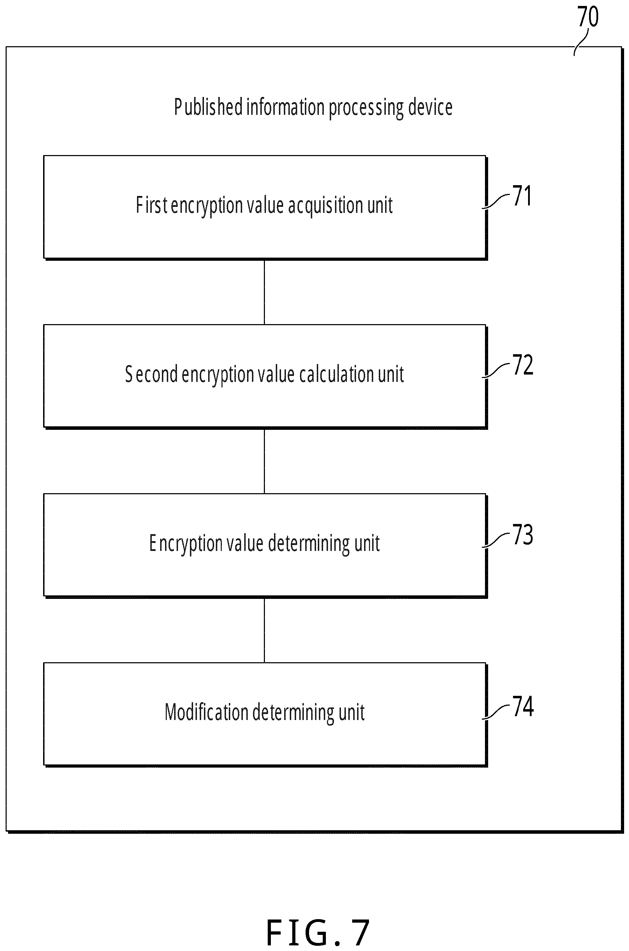

Another aspect of the present application further provides a published information processing device for client terminal. FIG. 7 is a schematic structural diagram illustrating modules in another implementation of a published information processing device, according to the present application. As shown in FIG. 7, the device 70 can include the following: a first encryption value acquisition unit 71, configured to read, from published information, a first encryption value that is of encrypted data including the last published information preceding the published information and that is calculated by using a predetermined encryption algorithm; or when published information is the first piece of published information of a publishing service item, read, from the published information, a first encryption value that is of predetermined initial information and that is calculated by using a predetermined encryption algorithm; a second encryption value calculation unit 72, configured to calculate, based on a disclosed predetermined encryption algorithm and the last published information that precedes the published information and that includes an encryption value, a second encryption value of the last published information that includes an encryption value; an encryption value determining unit 73, configured to determine whether the first encryption value is the same as the second encryption value; and a modification determining unit 74, configured to determine that at least one piece of published information before the published information is deleted or modified if the determining result of the encryption value determining unit is no.

According to the published information processing device provided in the present application, the users can verify, by using the client terminal, whether the encryption value of the published information matches a disclosed encryption value, and then determine whether the published information record is tampered with. Therefore, according to the device in this implementation, a role of the users in supervising the published information records can be further enhanced, and credibility of the published information is greatly improved, and the information publisher is highly trusted by the users.

Based on the published information processing method and device, according to the implementations of the present application, the present application further provides an information publishing system, and the system can include an I/O interface and a processor.

The I/O interface is configured to obtain information to be published, and send processed information to be published to a specified display processing unit.

The processor is configured to determine whether the information to be published is the first piece of published information corresponding to a publishing service item. If the determining result is yes, calculate an encryption value of predetermined initial information by using a predetermined encryption algorithm, and add the encryption value of the predetermined initial information to the information to be published; or otherwise, calculate, by using a predetermined encryption algorithm, an encryption value of encrypted data including the last published information preceding the information to be published, and add the encryption value of the encrypted data to the information to be published; and generate the processed information to be published. In the information publishing system, an association relationship can be established between mutually independent published information, and a linked encryption system is formed in a publishing service item that includes the published information. Therefore, according to the information publishing system in this implementation, difficulty in tampering with a published information record can be increased, originality and integrity of the published information record are maintained, and credibility of the published information is greatly improved.

Although data display and processing such as different hash data encryption methods, a method for adding an encryption value to information to be published, an information data extraction method, and an information display method in the implementations are described in the present application. The present application is not limited to a data processing and display case that completely conforms to an industry standard, a certain computer language execution standard, or the descriptions in this implementation. An implementation modified based on certain standardized computer languages or implementations can also achieve an implementation effect the same as, equivalent to, or similar to that achieved in the previous implementation, or achieve a predictable implementation effect after the previous implementation is transformed. Certainly, even if the data processing and determining methods are not used, the same application can still be implemented based on data encryption, information exchange, and information determining feedback method of the previous implementations of the present application. Details are omitted here for simplicity.

Although the present application provides method operation steps described in the implementations or flowcharts, more or fewer operation steps can be included based on a conventional or non-creative means. The example step sequence in the implementations is merely one of a plurality of step execution sequences, and does not represent a unique execution sequence. When being performed in an actual device or client terminal product, the operation steps can be performed based on a method sequence shown in the implementations or the accompanying drawings, or can be performed in parallel (for example, in an environment in which there are parallel processors or multi-thread processing is performed).

The units, devices, systems, and modules described in the previous implementations can be implemented by a computer chip or an entity, or implemented by a product that has a certain function. For ease of description, the previous device is described based on division of the functions into various modules. Certainly, when the present application is implemented, the functions of each module can be implemented in one or more pieces of software and/or hardware. Certainly, a module implementing the same function as a certain unit module described in the present application can also be implemented by a plurality of submodules or a combination of submodules.

A person skilled in the art also know that, in addition to implementing the controller by using the computer readable program code, logic programming can be performed on the method steps to allow the controller to implement the same function in forms of the logic gate, the switch, an application-specific integrated circuit, a programmable logic controller, and an embedded microcontroller. Therefore, the controller can be considered as a hardware component, and a device that is included in the controller and used to implement various functions can also be considered as a structure in the hardware component. Or, the device configured to implement various functions can even be considered as both a software module implementing the method and a structure in the hardware component.

The present application can be described in the general context of computer executable instructions executed by a computer, for example, a program module. Generally, the program module includes a routine, a program, an object, a component, a data structure, a type, and such, that performs a specific task or implements a specific abstract data type. The present application can also be practiced in distributed computing environments. In the distributed computing environments, tasks are performed by remote processing devices connected with a communications network. In a distributed computing environment, the program module can be located in both local and remote computer storage media including storage devices.

It can be seen from descriptions of the implementations that, a person skilled in the art can clearly understand that the present application can be implemented by using software in addition to a necessary universal hardware platform. Based on such an understanding, the technical solutions of the present application essentially, or the part contributing to the existing technology, can be implemented in a form of a software product. The computer software product can be stored in a storage medium, such as a ROM/RAM, a magnetic disk, or an optical disc, and includes several instructions for instructing a computer device (which can be a personal computer, a mobile device, a server, a network device, and such.) to perform the methods described in the implementations or in some parts of the implementations of the present application.

The implementations in the present specification are described in a progressive method. For the same or similar parts in the implementations, reference can be made to each other. Each implementation focuses on a difference from other implementations. The present application can be used in many general-purpose or dedicated computer device environments or configurations, for example, personal computers, server computers, handheld or portable devices, tablet-type devices, multi-processor devices, microprocessor-based devices, set-top boxes, programmable electronic devices, network PCs, minicomputers, mainframe computers, distributed computing environments including any one of the previously described apparatus or devices, and such.

## Claims

1. A method for processing information to be published, the method comprising:
obtaining information to be published (SS1); and
determining whether the information to be published is a first piece of published information corresponding to a publishing service item (SS2);
if the result of the determination is affirmative, then
a) calculating an encryption value of predetermined initial information using a predetermined encryption algorithm, and
b) adding the encryption value of the predetermined initial information to the information to be published (S2); or
if the result of the determination is negative, then
a') calculating, using the predetermined encryption algorithm, an encryption value of encrypted data, wherein the encrypted data comprises the last published information preceding the information to be published and a time of publication of the last published information, and
b') adding the encryption value of the encrypted data to the information to be published (S3); and
displaying, based on a predetermined format, the information to be published to which the encryption value is added (S4).

2. The method according to claim 1, wherein the encrypted data further comprises at least one piece of published information that is obtained using a predetermined method and that precedes the last published information.

3. The method according to claim 2, wherein the predetermined method comprises at least one of the following:
obtaining published information with a specified number of intervals before the information to be published; or
obtaining published information within a predetermined time range before the information to be published.

4. The method according to claim 1 or 2, wherein calculating, using the predetermined encryption algorithm, an encryption value of encrypted data comprising the last published information preceding the information to be published comprises:
extracting specified information data from published information comprised in the encrypted data (S11); and
encrypting the extracted specified information data using the predetermined encryption algorithm, to generate the encryption value (S12).

5. The method according to claim 1 or 2, wherein the method further comprises obtaining additional data information, wherein the encrypted data comprises the additional data information.

6. The method according to claim 1 or 2, wherein the predetermined encryption algorithm is a hash algorithm; and wherein the encryption value is a hash value obtained after processing is performed using the hash algorithm.

7. The method according to claim 1 or 2, wherein the publishing service item is of at least one of the following service types:
user comment management, timely announcement information, donation information, crowdsourcing data, a payment information record, and an order data record.

8. The method according to claim 1, wherein the information to be published is published, and wherein the method further comprises processing the published information, wherein the processing of the published information comprises:
reading, from the published information, a first encryption value of encrypted data, wherein the first encryption value is calculated using the predetermined encryption algorithm, wherein,
if the published information is not the first piece of published information of the publishing service item, the encrypted data comprises the last published information preceding the published information and the time of publication of the last published information, or
if the published information is the first piece of published information of the publishing service item, the encrypted data comprises the predetermined initial information (S101);
calculating a second encryption value (S102), wherein the calculation is based on a disclosed predetermined encryption algorithm, wherein the second encryption value is based on the last published information that precedes the published information, wherein the last published information that precedes the published information comprises an encryption value and the time of publication of the last published information;
determining whether the first encryption value is the same as the second encryption value (S103); and
if the result of the determination is negative, determining that at least one piece of published information before the published information is modified (S 104).

9. A device for processing information to be published, wherein the device comprises multiple units configured to perform operations according to the method of any one of claims 1 to 7.

10. A system comprising a device for processing information to be published, and a device for processing published information, wherein the device for processing information to be published and the device for processing information to be published are configured to perform operations according to the method of claim 8.

## Patentansprüche

1. Verfahren zum Verarbeiten von zu veröffentlichenden Informationen, wobei das Verfahren Folgendes umfasst:
Erhalten von zu veröffentlichenden Informationen (SS1); und
Bestimmen, ob die zu veröffentlichenden Informationen eine erste veröffentlichte Information sind, die einem Veröffentlichungsdienstelement entspricht (SS2);
falls das Ergebnis der Bestimmung positiv ist, dann
a) Berechnen eines Verschlüsselungswerts von vorbestimmten Anfangsinformationen unter Verwendung eines vorbestimmten Verschlüsselungsalgorithmus und
b) Hinzufügen des Verschlüsselungswerts der vorbestimmten Anfangsinformationen zu den zu veröffentlichenden Informationen (S2); oder
falls das Ergebnis der Bestimmung negativ ist, dann
a') Berechnen eines Verschlüsselungswerts von verschlüsselten Daten unter Verwendung des vorbestimmten Verschlüsselungsalgorithmus, wobei die verschlüsselten Daten die zuletzt veröffentlichten Informationen, die den zu veröffentlichenden Informationen vorangehen, und einen Zeitpunkt der Veröffentlichung der zuletzt veröffentlichten Informationen umfassen und
b') Hinzufügen des Verschlüsselungswerts der verschlüsselten Daten zu den zu veröffentlichenden Informationen (S3); und
Anzeigen der zu veröffentlichenden Informationen, zu denen der Verschlüsselungswert hinzugefügt wird, basierend auf einem vorbestimmten Format (S4).

2. Verfahren nach Anspruch 1, wobei die verschlüsselten Daten ferner wenigstens eine veröffentlichte Information umfassen, die unter Verwendung eines vorbestimmten Verfahrens erhalten wird und die den zuletzt veröffentlichten Informationen vorangeht.

3. Verfahren nach Anspruch 2, wobei das vorbestimmte Verfahren Folgendes umfasst:
Erhalten von veröffentlichten Informationen mit einer festgelegten Anzahl von Intervallen vor den zu veröffentlichenden Informationen; und/oder Erhalten von veröffentlichten Informationen innerhalb eines vorbestimmten Zeitbereichs vor den zu veröffentlichenden Informationen.

4. Verfahren nach Anspruch 1 oder 2, wobei das Berechnen eines Verschlüsselungswerts von verschlüsselten Daten, die die zuletzt veröffentlichten Informationen umfassen, die den zu veröffentlichenden Informationen vorangehen, unter Verwendung des vorbestimmten Verschlüsselungsalgorithmus Folgendes umfasst:
Extrahieren von festgelegten Informationsdaten aus veröffentlichten Informationen, die in den verschlüsselten Daten enthalten sind (S11); und
Verschlüsseln der extrahierten festgelegten Informationsdaten unter Verwendung des vorbestimmten Verschlüsselungsalgorithmus, um den Verschlüsselungswert zu erzeugen (S12).

5. Verfahren nach Anspruch 1 oder 2, wobei das Verfahren ferner das Erhalten von zusätzlichen Dateninformationen umfasst, wobei die verschlüsselten Daten die zusätzlichen Dateninformationen umfassen.

6. Verfahren nach Anspruch 1 oder 2, wobei der vorbestimmte Verschlüsselungsalgorithmus ein Hash-Algorithmus ist; und wobei der Verschlüsselungswert ein Hash-Wert ist, der erhalten wird, nachdem eine Verarbeitung unter Verwendung des Hash-Algorithmus durchgeführt wurde.

7. Verfahren nach Anspruch 1 oder 2, wobei das Veröffentlichungsdienstelement eine der folgenden Dienstarten ist:
Benutzerkommentarverwaltung, Informationen zu rechtzeitigen Ankündigungen, Spendeninformationen, Crowdsourcing-Daten, ein Zahlungsinformationsdatensatz und/oder ein Bestelldatensatz.

8. Verfahren nach Anspruch 1, wobei die zu veröffentlichenden Informationen veröffentlicht werden und wobei das Verfahren ferner das Verarbeiten der veröffentlichten Informationen umfasst, wobei das Verarbeiten der veröffentlichten Informationen Folgendes umfasst:
Lesen eines ersten Verschlüsselungswerts von verschlüsselten Daten aus den veröffentlichten Informationen, wobei der erste Verschlüsselungswert unter Verwendung des vorbestimmten Verschlüsselungsalgorithmus berechnet wird, wobei,
falls die veröffentlichten Informationen nicht die erste veröffentlichte Information des Veröffentlichungsdienstelements sind, die verschlüsselten Daten die zuletzt veröffentlichten Informationen, die den veröffentlichten Informationen vorangehen, und den Zeitpunkt der Veröffentlichung der zuletzt veröffentlichten Informationen umfassen, oder wobei,
falls die veröffentlichten Informationen die erste veröffentlichte Information des Veröffentlichungsdienstelements sind, die verschlüsselten Daten die vorbestimmten Anfangsinformationen umfassen (S101);
Berechnen eines zweiten Verschlüsselungswerts (S102), wobei die Berechnung auf einem offenbarten vorbestimmten Verschlüsselungsalgorithmus basiert, wobei der zweite Verschlüsselungswert auf den zuletzt veröffentlichten Informationen basiert, die den veröffentlichten Informationen vorangehen, wobei die zuletzt veröffentlichten Informationen, die den veröffentlichten Informationen vorangehen, einen Verschlüsselungswert und den Zeitpunkt der Veröffentlichung der zuletzt veröffentlichten Informationen umfassen;
Bestimmen, ob der erste Verschlüsselungswert der gleiche wie der zweite Verschlüsselungswert ist (S103); und
falls das Ergebnis der Bestimmung negativ ist, Bestimmen der wenigstens einen veröffentlichten Information, bevor die veröffentlichten Informationen modifiziert werden (S104).

9. Vorrichtung zum Verarbeiten von zu veröffentlichenden Informationen, wobei die Vorrichtung mehrere Einheiten umfasst, die konfiguriert sind, um Abläufe gemäß dem Verfahren nach einem der Ansprüche 1 bis 7 durchzuführen.

10. System, das eine Vorrichtung zum Verarbeiten von zu veröffentlichenden Informationen und eine Vorrichtung zum Verarbeiten von veröffentlichten Informationen umfasst, wobei die Vorrichtung zum Verarbeiten von zu veröffentlichenden Informationen und die Vorrichtung zum Verarbeiten von zu veröffentlichenden Informationen konfiguriert sind, um Abläufe gemäß dem Verfahren nach Anspruch 8 durchzuführen.

## Revendications

1. Procédé de traitement d'informations à publier, le procédé comprenant :
l'obtention d'informations à publier (SS1) ; et
la détermination du fait de savoir si les informations à publier sont une information publiée correspondant à un article de service de publication (SS2) ;
si le résultat de la détermination est affirmatif, alors
a) le calcul d'une valeur de chiffrement d'informations initiales prédéterminées à l'aide d'un algorithme de chiffrement prédéterminé, et
b) l'ajout de la valeur de chiffrement des informations initiales prédéterminées aux informations à publier (S2) ; ou
si le résultat de la détermination est négatif, alors
a') le calcul, à l'aide de l'algorithme de chiffrement prédéterminé, d'une valeur de chiffrement de données chiffrées, les données chiffrées comprenant les dernières informations publiées précédant les informations à publier et une heure de publication des dernières informations publiées, et
b') l'ajout de la valeur de chiffrement des données chiffrées aux informations à publier (S3) ; et
l'affichage, sur la base d'un format prédéterminé, des informations à publier auxquelles la valeur de chiffrement est ajoutée (S4).

2. Procédé selon la revendication 1, dans lequel les données chiffrées comprennent en outre au moins une information publiée qui est obtenue à l'aide d'un procédé prédéterminé et qui précède la dernière information publiée.

3. Procédé selon la revendication 2, dans lequel le procédé prédéterminé comprend :
l'obtention d'informations publiées avec un nombre spécifié d'intervalles avant les informations à publier ; et/ou
l'obtention d'informations publiées dans les limites d'une plage de temps prédéterminée avant les informations à publier.

4. Procédé selon la revendication 1 ou 2, dans lequel le calcul, à l'aide de l'algorithme de chiffrement prédéterminé, d'une valeur de chiffrement de données chiffrées comprenant les dernières informations publiées précédant les informations à publier comprend :
l'extraction de données d'informations spécifiées à partir d'informations publiées comprises dans les données chiffrées (S11) ; et
le chiffrement des données d'informations spécifiées extraites à l'aide de l'algorithme de chiffrement prédéterminé, pour générer la valeur de chiffrement (S 12).

5. Procédé selon la revendication 1 ou 2, dans lequel le procédé comprend en outre l'obtention d'informations de données supplémentaires, dans lequel les données chiffrées comprennent les informations de données supplémentaires.

6. Procédé selon la revendication 1 ou 2, dans lequel l'algorithme de chiffrement prédéterminé est un algorithme de hachage ; et dans lequel la valeur de chiffrement est une valeur de hachage obtenue après que le traitement a été exécuté à l'aide de l'algorithme de hachage.

7. Procédé selon la revendication 1 ou 2, dans lequel l'article de service de publication est d'au moins l'un des types de service suivants :
la gestion de commentaires d'utilisateurs, des informations d'annonce en temps opportun, des informations de don, des données de production participative, un enregistrement d'informations de paiement et un enregistrement de données de commande.

8. Procédé selon la revendication 1, dans lequel les informations à publier sont publiées, et dans lequel le procédé comprend en outre le traitement des informations publiées, dans lequel le traitement des informations publiées comprend :
la lecture, à partir des informations publiées, d'une première valeur de chiffrement de données chiffrées, la première valeur de chiffrement étant calculée à l'aide de l'algorithme de chiffrement prédéterminé,
si les informations publiées ne sont pas la première information publiée de l'article de service de publication, les données chiffrées comprenant les dernières informations publiées précédant les informations publiées et l'heure de publication des dernières informations publiées, ou
si les informations publiées sont la première information publiée de l'élément de service de publication, les données chiffrées comprenant les informations initiales prédéterminées (S101) ;
le calcul d'une seconde valeur de chiffrement (S102), le calcul étant basé sur un algorithme de chiffrement prédéterminé révélé, la seconde valeur de chiffrement étant basée sur les dernières informations publiées qui précèdent les informations publiées, les dernières informations publiées qui précèdent les informations publiées comprenant une valeur de chiffrement et l'heure de publication des dernières informations publiées ;
la détermination du fait de savoir si la première valeur de chiffrement est la même que la seconde valeur de chiffrement (S103) ; et
si le résultat de la détermination est négatif, la détermination du fait qu'au moins une information publiée avant les informations publiées est modifiée (S104).

9. Dispositif de traitement d'informations à publier, dans lequel le dispositif comprend plusieurs unités configurées pour exécuter des opérations selon le procédé de l'une quelconque des revendications 1 à 7.

10. Système comprenant un dispositif pour traiter des informations à publier et un dispositif pour traiter des informations publiées, dans lequel le dispositif pour traiter des informations à publier et le dispositif pour traiter des informations à publier sont configurés pour exécuter des opérations selon le procédé de la revendication 8.
